# EUROPEAN PATENT APPLICATION

(11) **EP 3 641 094 A1**
(43) Date of publication of application: **22.04.2020**
(21) Application number: 18465607.2
(22) Date of filing: 15.10.2018
(51) Int. Cl.: H02J 7/00

(54) **BATTERY BALANCING SYSTEM AND METHOD OF OPERATING A BATTERY BALANCING SYSTEM**

(71) Applicant: Continental Automotive GmbH, 30165 Hannover (DE)
(72) Inventor: Kotlar, Aurelian, 300191 Timisoara (RO); Lica, Septimiu, 300245 Timisoara (RO)

(57) **Abstract**

Battery balancing system (1), comprising
- a number of (galvanic) battery cells (3) or (galvanic) battery packs, each battery cell (3) or each battery pack being connected to an insulated bidirectional DC/DC converter (5), the DC/DC converter (5) being adapted to set a predetermined input or output voltage for the battery cell (3) or the battery pack;
- a DC link bus (11) in connection with the DC/DC converters (5) ;
- a controller (15) which controls current to and from the battery cells (3) or the battery packs by driving the DC/DC-converters (5) accordingly.

## Description

The present invention relates to a battery balancing system comprising a number of (galvanic) battery cells or (galvanic) battery packs. Furthermore, the present invention relates to a method of operating such a battery balancing system.

A battery is a device consisting of one or more electrochemical battery cells or battery packs, which may provide electrical power to an electrical device, for example an electric car. The present invention relates to an electric battery having more than one electrochemical cell or more than one battery pack. A battery pack is a set of any number of (preferably) identical or individual battery cells.

Balancing the individual battery cells or the individual battery packs of the battery during charging and discharging is an important topic today. Identical battery cells or battery packs of a battery typically have different capacities, due to manufacturing tolerances and/or aging. These differences are to be taken into account in order to enhance the capacity and lifetime of the battery.

Different approaches have been taken to solve the problem of battery balancing. The document US 6 208 117 B1 proposes shunting with a dissipative element, for example a resistor, between overcharged battery cells or battery packs. Furthermore, sometimes DC/DC converters are used to charge different battery cells or different battery packs with a different charging current.

It is an object of the present invention to provide a battery balancing system and a method of operating such a system, which allows balancing of individual battery cells or individual battery packs of a battery during charging and discharging, the battery balancing system being simple and cheap and using technologies which are easy to implement.

This object is achieved by means of the battery balancing system according to claim 1 and the method of operating a battery balancing system according to claim 5. Advantageous embodiment and developments are objects of the dependent claims.

According to a first aspect of the invention, a battery balancing system is provided, comprising a number of (galvanic) battery cells or (galvanic) battery packs, each battery cell or each battery pack being connected to an insulated bidirectional DC/DC converter, the DC/DC converter being adapted to set a predetermined input or output voltage for the battery cell or the battery pack.

Furthermore, the battery balancing system comprises a DC link bus in connection with the DC/DC converters and a controller which controls current to and from the battery cells or the battery packs by driving the DC/DC converters accordingly.

According to this embodiment, an insulated bidirectional DC/DC converter is coupled to each battery cell or each battery pack of the battery. The other end of the converter is coupled to a DC link bus which connects all DC/DC converters of the battery balancing system. The DC/DC converters are bidirectional, i.e. they are adapted to transfer electric energy during discharging from the battery cells or the battery packs to a load and as well during charging from a charger to the battery cells or the battery packs. This makes it possible to balance the battery cells or the battery packs during charging as well as during discharging.

While one side of the DC/DC converters is connected to the battery cell or the battery pack, the other side is connected to the DC link bus. By means of the DC link bus, it is possible to transfer energy from one battery cell or one battery pack to another battery cell or another battery pack.

A controller, for example a microprocessor, is used to drive the DC/DC converters to balance the battery cells or the battery packs by providing them with the appropriate voltage. The controller, which may be provided with information about the current state of charge of all battery cells or all battery packs, determines when the DC/DC converter should be switched on and will set the direction of the energy transfer. Furthermore, the controller is able to control the maximum current and voltage in the battery balancing system.

The battery balancing system has the advantage, that it can be used to balance the battery cells or the battery packs during charging as well as during discharging. Thus, the current state of charge of the battery cells or the battery packs may be balanced which increases the lifetime and the capacity of the battery.

According to an embodiment of the invention, at least one capacitor is connected to the DC link bus, its capacity being adapted to store and release electric energy from the DC link bus.

This embodiment has the advantage, that the capacitor, which may be a high capacity capacitor or an ultracapacitor, can be used as a buffer to store electric energy extracted from overcharged battery cells or battery packs with the help of the DC/DC converters. When on the other hand one or more battery cells or battery packs are discharged too deeply, current may be provided to them from the capacitor or from other battery cells or battery packs via the DC link bus. The energy stored in the DC linkcapacitor represents an energy reserve, which may be used when needed. In the case of a high current impulse, all DC/DC converters could extract current from the DC link capacitor in order to help the batteryto sustain the needed current.

According to one embodiment, the insulated bidirectional DC/DC converters are buck-boost converters. For example, the DC/DC converters could be Cuk-converters. These are suitable known and robust DC/DC converters which may be insulated and which may work bidirectional.

According to an embodiment of the invention, the battery balancing system comprises means to determine the state of charge of the individual battery cells or the individual battery packs. Such means are known in the art. The determined state of charge of individual battery cells or individual battery packs may be signaled to the controller and used to determine the requirement to provide energy to a battery cell or a battery pack, or to extract energy from a battery cell or a battery pack.

According to one aspect of the invention, a method of operating a battery balancing system is provided, the battery balancing system comprising a number of (galvanic) battery cells or (galvanic) battery packs, each battery cell or each battery pack being connected to an insulated bidirectional DC/DC converter, the DC/DC converter being adapted to set a predetermined input or output voltage for the battery cell or the battery pack. The method comprises determining a state of charge of individual battery cells or individual battery packs of the system, determining a current demand on the battery and driving the DC/DC converters to meet the current demand with regard to the state of charge of the individual battery cells or the individual battery packs.

The method has the advantage, that the battery can be balanced both during charging and during discharging. Since the balancing is done by distributing the electric energy evenly instead of by dissipating excess energy, the method is very economical.

According to an embodiment of the invention, an excess of electric energy may be stored by means of the DC link capacitor. In case of an undersupply, energy can be supplied from the DC link capacitor to battery cells (or battery packs) or to an external load.

Further advantages, advantageous embodiments and developments of the invention will become apparent from the exemplary embodiments which are described below in association with the schematic figure.

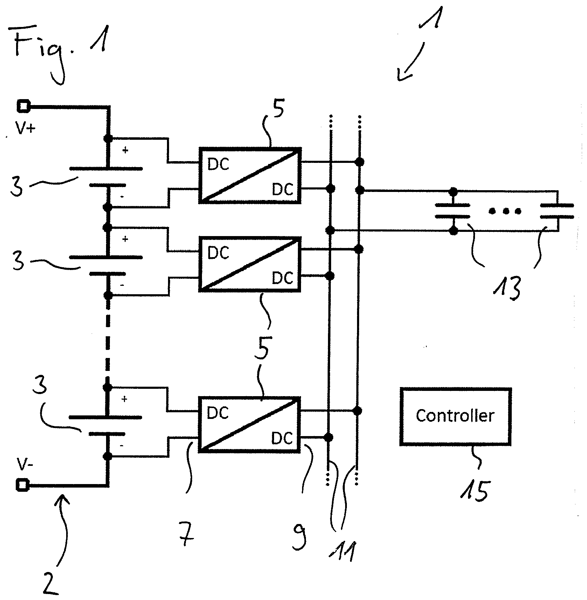

The only figure 1 shows a battery balancing system according to an embodiment of the invention.

The battery balancing system 1 according to figure 1 comprises a battery 2 with a number of (galvanic) cells 3 (or battery packs) which are connected to form the battery 2. The battery balancing system 1 furthermore comprises DC/DC converters 5. Each (galvanic) cell 3 is connected to a first side 7 of one DC/DC converter 5. The second side 9 of the DC/DC converter 5 is connected to a DC link bus 11. Thus, all DC/DC converters 5 are interconnected by the DC link bus 11.

The DC/DC converters 5 are operated by a controller 15. The controller 15 is provided with information about the current state of charge of the (galvanic) cells 3.

The battery balancing system 1 furthermore comprises a number of capacitors 13 which are connected to the DC link bus 11. The capacitors 13 may be high capacity capacitors or supercapacitors .

During operation, the controller 15 drives the DC/DC converters 5 in order to ensure that no overcharging or deep discharging of the battery 2 occurs. To achieve this, the controller 15 decides when a DC/DC converter 5 is switched on and sets the direction of the conversion.

By means of the DC link bus 11, electric energy may be transferred from one (galvanic) cell 3 to another by driving the DC/DC converters 5 accordingly. An excess of electrical energy can be stored in the capacitors 13. In case of a high current demand, all DC/DC converters 5 can extract energy from the capacitors 13 in order to sustain the needed current. Therefore, the capacitors 13 work as a buffer to store and release electric energy.

### List of reference symbols

- 1: battery balancing system
- 2: battery
- 3: cell
- 5: DC/DC converter
- 7: first side
- 9: second side
- 11: DC link bus
- 13: capacitor
- 15: controller

## Claims

1. Battery balancing system (1), comprising
- a number of (galvanic) battery cells (3) or (galvanic) battery packs, each battery cell (3) or each battery pack being connected to an insulated bidirectional DC/DC converter (5), the DC/DC converter (5) being adapted to set a predetermined input or output voltage for the battery cell (3) or the battery pack;
- a DC link bus (11) in connection with the DC/DC converters (5) ;
- a controller (15) which controls current to and from the battery cells (3) or the battery packs by driving the DC/DC-converters (5) accordingly.

2. Battery balancing system (1) according to claim 1,
wherein at least one capacitor (13) is connected to the DC link bus (11), its capacity being adapted to store and release electric energy from the DC link bus (11).

3. Battery balancing system (1) according to claim 1 or 2, wherein the insulated bidirectional DC/DC converters (5) are buck-boost converters.

4. Battery balancing system (1) according to any of the preceding claims,
wherein the battery balancing system (1) comprises means to determine a state of charge of the individual battery cells (3) or the individual battery packs.

5. Method of operating a battery balancing system (1), the battery balancing system (1) comprising a number of (galvanic) battery cells (3) or (galvanic) battery packs, each battery cell (3) or each battery pack being connected to an insulated bidirectional DC/DC converter (5), the DC/DC converter (5) being adapted to set a predetermined input or output voltage for the battery cell (3) or the battery pack, the method comprising
- determining a state of charge of individual battery cells (3) of the system (1);
- determining a current demand on the battery (2) and
- driving the DC/DC converters (5) to meet the current demand with regard to the state of charge of the individual battery cells (3) or the individual battery packs.

6. Method according to claim 5,
wherein excess electrical energy is stored by means of at least one DC link capacitor (13).

7. Method according to claim 5 or 6,
wherein energy is supplied from at least one DC link capacitor (13) in case of an undersupply.
